# EUROPEAN PATENT SPECIFICATION

(11) **EP 2 648 192 B1**
(45) Date of publication and mention of the grant of the patent: **22.04.2015**
(21) Application number: 10860210.3
(22) Date of filing: 29.11.2010
(51) Int. Cl.: H01B 7/282, H01B 7/14, H01B 9/02, H01B 7/285

(54) **WATER BLOCKING ELECTRIC CABLE**
WASSERDICHTES ELEKTRISCHES KABEL
CÂBLE ÉLECTRIQUE À BLOCAGE D'EAU

(43) Date of publication of application: 09.10.2013
(73) Proprietor: J-Power Systems Corporation, Tokyo 108-0073 (JP)
(72) Inventor: INOUE, Yoshiyuki, Tokyo 108-0073 (JP)
(74) Representative: Gill, David Alan
(86) International application number: PCT/JP2010/071244
(87) International publication number: WO 2012/073303

(56) References cited:
- WO-A1-01/12432
- WO-A1-2009/148811
- JP-A- 10 106 353
- JP-A- 10 106 356
- JP-A- 10 324 839
- JP-A- 50 106 176
- JP-A- 59 008 216
- JP-A- 59 009 810
- JP-A- 2000 164 046
- JP-A- 2001 143 541
- JP-A- 2008 521 182
- JP-U- 59 192 212
- US-A- 3 441 660
- US-A- 4 042 776
- US-A- 4 095 039
- US-A- 5 095 175

## Description

### BACKGROUND OF THE INVENTION

### FIELD OF THE INVENTION

The present invention relates to a water blocking power cable. More specifically, it primarily relates to a water blocking power cable used for power transmission cables and the like to be laid in water as a submarine cable, and a water blocking power cable which is capable of effectively blocking the water penetration (i.e. the water penetration along a longitudinal direction of a conductor), even if water penetration to the conductor occurs due to the insulating coating material of the cable being accidentally broken.

### DESCRIPTION OF THE RELATED ART

Conventionally, for a watertight conductor formed by twisting a plurality of wires filled with a watertight material such as rubber, resin or highly viscous oil therebetween, various proposals have been made. For example, as the watertight material to fill in the conductor, a composition (mixture) containing amorphous poly-α-olefin, polybutene, and carbon black with a specific surface area of **600** to **1200** m²/g has been proposed (e.g. refer to Patent Literature 1). In addition, as the watertight material, numerous proposals such as one containing water-absorbing material (e.g., refer to Patent Literature 2), silane crosslinked one (e.g., refer to Patent Literature 3), etc. have been made.

The applications of these watertight conductors are roughly classified in two ways. One is a so-called insulated wire application, which is an overhead line to be installed between telephone poles etc., and to be used at relatively low voltage. In this case, the watertight conductor is used to prevent corrosion cleavage phenomenon of the conductor caused by intrusion of rainwater from the end of the wire. In this insulated wire, for the primary purpose of intrusion prevention of rainwater, the watertight material to be used is required primarily for close contact property with the conductor and is not necessarily required for adhesion property with the conductor. Further, since during connection operation, it is necessary to remove the watertight material from the conductor, it is important that peeling from the conductor is easy (peelability is good). As such an insulated wire, for example, one with improved peelability by silane crosslinking the watertight material has been proposed (e.g., refer to Patent Literature 4).

Further, because the above insulated wire is used at relatively low voltage, a manufacturing method of an inner semiconductive layer is different from those of a type that is extrusion molded simultaneously with the insulating layer in one cross-head as used in a solid insulated cable having an insulating layer of a resin or rubber at high voltage or special high voltage or more, and a type that a conductive watertight material once is molded to cover the entire outermost layer of the conductor and an insulation layer is molded thereon by extrusion using a separate process or different cross-head is commonly used.

Then, another application is the use of a power transmission cable or the like to be laid in water such as a submarine cable or the like to be used at a high voltage, special high voltage or higher. When using the water blocking power cable as a submarine cable, it is necessary to block the water penetration in accordance with the depth. For example, when it is laid at a water depth of **100** m, since it is necessary to block the water penetration against a pressure of **10** atm, it is important that the watertight material has the uniform adhesion in the axial direction and longitudinal direction of the conductor, and as the watertight material, for example, a composition comprising carbon black and butyl rubber, a composition comprising polybutene and carbon black, or a composition comprising atactic polypropylene, graphite and wax and the like are known (See e.g., "Prior art" in Patent Literature 1). US 5095175 discloses water tight rubber or plastic insulated cables. WO 2009 148811 discloses water free resistant cable sheaths.

Further, because of use at a voltage of high voltage, special high voltage or more, in order to improve the withstand voltage characteristics, it is necessary to smooth the interface between the inner semiconductive layer and the insulating layer of the cable. Therefore, it is common that the inner semiconductive layer is extruded simultaneously with the insulating layer within one crosshead during cable manufacturing. However, if a composition or the like made of a conductive material mainly comprising carbon black and butyl rubber which are the above described watertight material having a good adhesion property with the conductor is used as the inner semiconductive layer, there will be a problem that no smooth interface can be obtained since the fluidity thereof is different from that of the polyolefin-based material used for the insulating layer. Therefore, as it stands, it is necessary to use the conductive material mainly comprising the composition (mixture) containing carbon black blended in the polyolefin-based material having a similar fluidity to that of the insulating layer for the inner semiconductive layer, as in the general solid insulated cable. In this case, in order to reduce the outer diameter of the entire cable, the inner semiconductive layer is directly extrusion molded without covering the watertight material on the outermost layer of the conductor, and as a result, the outermost layer of the conductor is structured to be in direct contact with the inner semiconductive layer.

### PRIOR ART LITERATURE

### PATENT LITERATURE

Patent Literature 1: JP-A-**10-324839**
Patent Literature 2: JP-A-**2005-48080**
Patent Literature 3: JP-A-**2002-138169**
Patent Literature 4: JP-A-**2002-343164**

### SUMMARY OF THE INVENTION

### PROBLEMS TO BE SOLVED BY THE INVENTION

As described above, in the case of the water blocking power cables used at voltages of high voltage and special high voltage or higher for use in submarine cables and the like, as an inner semiconductive layer, a conductive material containing as a main component a mixture of carbon black blended in a polyolefin based material is used in direct contact with the conductor of the outermost layer. Because such a conductive material mainly comprising a mixture produced by blending carbon black in a polyolefin-based material may often be poor in adhesion property with the conductor in comparison with the conductive material mainly comprising a mixture comprising e.g., butyl rubber and carbon black, there is a problem with adhesion property with the conductor.

Furthermore, by electrical conduction of the conductor, the inner semiconductive layer used in the high voltage, super-high voltage and ultra-high voltage cables is allowed to be exposed to high temperatures, e.g. maximum normal temperature of **90** degrees Celsius and instantaneous conductor temperature of **200** degrees Celsius. Accordingly, there is a problem that the interface between the inner semiconductive layer and the insulating layer is deformed and the smoothness is impaired by the influence of heat from the conductor so that the electrical performance is deteriorated. Crosslinking is needed in order to prevent this deformation, but it becomes easy to be peeled from the conductor by the crosslinking. This is shown in Patent Literature 4 above. From this point, there is also a watertight problem.

In recent years, demand for use in deeper sea floor or the like is increasing, and it is required to be also used under pressure of depth **300** m (about **30** atmospheres) or so, but in such applications, in particular, there is a problem that water penetration tends to occur at the interface between the conductor and the inner semiconductive layer.

The present invention has been made in order to solve the above problems, and it is an object of the present invention to provide a water blocking power cable, which is capable of effectively blocking the water penetration (particularly, the water penetration at the interface between the conductor and the inner semiconductive layer), even if the water penetration to the conductor occurs due to the insulating coating material of the cable being accidentally broken. By the water blocking in this way, in the event of an accident or the like, it is possible to ensure an early recovery by replacement of only damaged portion.

### MEANS FOR SOLVING THE PROBLEMS

For achieving the above object, the present invention provides a water blocking power cable as below.
[1] A water blocking power cable, comprising:
   a cable core comprising in this order:
      a watertight conductor formed by twisting a plurality of wires filled with watertight material there between;
      an inner semiconductive layer formed of a conductive material mainly comprising a mixture blended **100** parts by weight of polyolefin based rubber or resin, **10** to **100** parts by weight of carbon black, and **0.3** to **3.0** parts by weight of aliphatic alkyl peroxide, the inner semi conductive layer being crosslinked by heating;
      an insulating layer formed from an insulating coating material mainly comprising polyolefin based rubber or resin; and
      an outer semiconductive layer.
[2] The water blocking power cable according to [1], wherein the inner semiconductive layer, the insulating layer, and the outer semiconductive layer are formed successively by extrusion at the same time of at least the inner semiconductive layer and the insulating layer over the watertight conductor.
[3] The water blocking power cable according to [1] or [2], wherein the aliphatic alkyl peroxide constituting the inner semiconductive layer is one compound of **2,5**-dimethyl-**2,5**-di(t-butylperoxy) hexane and **2,5**-dimethyl-**2,5**-di(t-butylperoxy) hexyne-**3**, or a mixture thereof.
[4] The water blocking power cable according to any one of [1] to [3], wherein the polyolefin based rubber or resin constituting the inner semiconductive layer is one compound of ethylene-vinyl acetate copolymer (EVA) resin and ethylene ethyl acrylate copolymer (EEA) resin, or a mixture of two or more selected from ethylene-vinyl acetate copolymer (EVA) resin, ethylene ethyl acrylate copolymer (EEA) resin and ethylene propylene (EP) rubber.

### EFFECTS OF THE INVENTION

According to the present invention, it is possible to provide the water blocking power cable, which is capable of effectively blocking the water penetration (particularly, the water penetration at the interface between the conductor and the inner semiconductive layer), even if the water penetration to the conductor occurs due to the insulating coating material of the cable being accidentally broken. By the water blocking in this way, in the event of an accident or the like, it is possible to ensure an early recovery by replacement of only damaged portion.

### BRIEF DESCRIPTION OF THE DRAWINGS

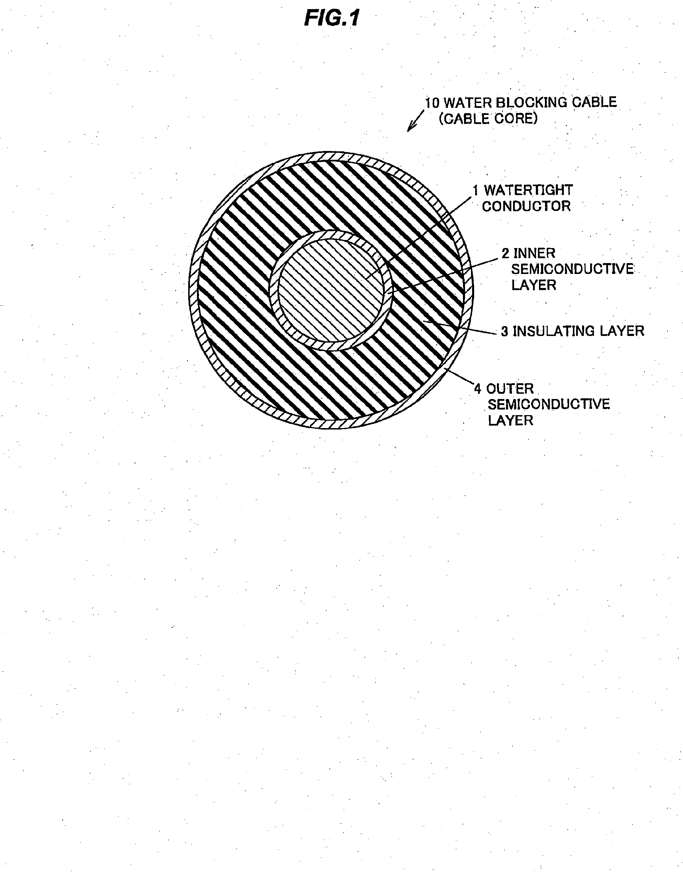

**FIG. 1** is a sectional view schematically showing a cable core constituting the water blocking power cable according to an embodiment of the present invention.

### EXPLANATION OF REFERENCE NUMERALS

- 1: Watertight conductor
- 2: Inner semiconductive layer
- 3: Insulating layer
- 4: Outer semiconductive layer
- 10: Water blocking cable (Cable core)

### EMBODIMENTS FOR CARRYING OUT THE INVENTION

### [Water blocking power cable]

**FIG. 1** is a sectional view schematically showing a cable core constituting a water blocking power cable according to embodiment for carrying out the present invention (the present embodiment). As shown in **FIG. 1****,** a water blocking power cable **10** according to this embodiment is configured to have in this order a watertight conductor **1** formed by twisting a plurality of wires filled with a watertight material therebetween, an inner semiconductive layer **2** formed of a conductive material mainly comprising a mixture blended **100** parts by weight of polyolefin based rubber or resin, **10** to **100** parts by weight of carbon black, and **0.3** to **3.0** parts by weight of aliphatic alkyl peroxide, the inner semiconductive layer **2** being crosslinked by heating, an insulating layer **3** formed from an insulating coating material mainly comprising polyolefin based rubber or resin, and an outer semiconductive layer **4.** As shown in FIG **1****,** the water blocking power cable **10** is configured as one cable core (e.g., outer diameter **35** mm) comprising a watertight conductor **1,** an inner semiconductive layer **2,** an insulating layer **3** and an outer semiconductive layer **4**, and the water blocking power cable **10** with this cable core has a structure in which a shielding layer, an under sheath water blocking tape, a sheath, a protective layer and the like are provided around the outer periphery of the cable core as appropriate depending on the application. Further, although not shown, it may be configured as a bundle of two or three cables each of which comprises a shield layer, an under sheath water blocking tape, a sheath, a protective layer and the like provided on the outer periphery of the cable core.

Mainly, the water blocking power cable according to the present embodiment is particularly suitably used for power transmission cables and the like that are to be laid in water and used as a submarine cable used at voltages of high voltage and special high voltage or higher, but the use of the water blocking power cable in the present embodiment is not limited thereto, but may, of course, be used as a land cable, and if necessary, may be used, for example, for a so-called insulated wire or the like to be used at a relatively low voltage.

### (Watertight conductor)

The watertight conductor 1 used in the present embodiment is formed by twisting a plurality of wires filled with the watertight material in the gaps therebetween. The constituent material of the wires and the watertight material are not particularly limited, but a material that is widely used may be used. For example, as the wires, **1** to **12** mm outer diameter copper wire, aluminum wire, etc. may be used. In addition, the wires are usually used by twisting **7** to **127** identical outer diameter wires together, but may be used by a combination of conductors of different diameters, in which case various numbers of the wires are used by twisting. As the watertight material to be filled between the wires, e.g., a resin or rubber such as butyl rubber or the like or high-viscosity oil such as polybutene or the like may be used.

The outer diameter of the watertight conductor **1** may be e.g. **3** to **40** mm. Incidentally, in this embodiment, the watertight material is not coated on the outermost layer of the watertight conductor **1.** The outermost layer of the watertight conductor 1 is configured to directly contact with the inner semiconducting layer 2, which will be described later.

### (Inner semiconductive layer)

In this embodiment, the inner semiconductive layer **2** is provided between the insulating layer and the conductor in the water blocking power cable to form a smooth and close contact interface thereby preventing the occurrence of electric field concentration region, and is therefore used to improve the withstand voltage characteristics of the entire cable.

The inner semiconductive layer **2** used in this embodiment is formed from an conductive material mainly containing a mixture blended **100** parts by weight of polyolefin-based rubber or resin, **10** to **100** parts by weight in a carbon black to achieve a conductivity of **10⁵** or less in the operating temperature range, more specifically, **40** to **80** parts by weight in an acetylene-based carbon black Denka Black (registered trademark), **10** to **40** parts by weight in a special conductive carbon (trade name Ketjen Black), **40** to **80** parts by weight in an electrically conductive furnace black, **60** to **100** parts by weight of other furnace black, and **0.3** to **3.0** parts by weight of aliphatic alkyl peroxide, preferably, **0.5** to **3.0** parts by weight, more preferably, **0.5** to **1.0** parts by weight.

Here, as examples of the polyolefin based rubber or resin, there can be listed rubbers such as ethylene-propylene (EP) rubber, ethylene-butene rubber, etc. or resins such as high-pressure low density polyethylene, low-pressure process medium and high density polyethylene, low-pressure process low-density polyethylene, low-pressure process very low density polyethylene, ethylene-vinyl acetate copolymer (EVA) resin, ethylene-ethyl acrylate copolymer (EEA) resin, ethylene-methyl methacrylate copolymer (EMMA) resin, etc., or a mixture thereof, but it is not particularly limited thereto.

In this embodiment, the polyolefin based rubber or resin constituting the inner semiconductive layer **2** is preferably one compound of ethylene ethyl acrylate copolymer (EVA) and ethylene-vinyl acetate copolymer resin (EEA) resin, or a mixture of two or more selected from ethylene-vinyl acetate copolymer (EVA) resin or ethylene ethyl acrylate copolymer (EEA) resin and ethylene propylene (EP) rubber. When used as a mixture of ethylene-vinyl acetate copolymer (EVA) or ethylene and propylene (EEA) resin and ethylene propylene (EP) rubber, the mixing ratio thereof is preferably mainly the resin component, and the rubber component is less in amount than the resin component.

Further, as the carbon black, there can be listed acetylene black, furnace black, Ketjen black with improved electrical conductivity, etc. As described above, the blend amount of the carbon black varies depending on the type of carbon black in order to achieve a conductivity of **10⁵** or less in the operating temperature range, and relative to 100 parts by weight of polyolefin-based rubber or resin, is preferably **40** to **80** parts by weight in an acetylene-based carbon black Denka Black (registered trademark), **10** to **40** parts by weight in a special conductive carbon (trade name Ketj en Black), **40** to **80** parts by weight in an electrically conductive furnace black, **60** to **100** parts by weight of other furnace black. If it is less than the above parts by weight, the electrical conductivity may be insufficient, and the loss during power transmission may increase in the remarkable case. Further, if it exceeds above parts by weight, the viscosity of the whole material may increase and prevent molding of the cable.

Further, as the aliphatic alkyl peroxide, there can be listed one compound of **2,5**-dimethyl-**2,5**-di(t-butylperoxy) hexane and **2,5**-dimethyl-**2,5**-di(t-butylperoxy) hexyne-**3**, or a mixture thereof, from the point of view of the reaction temperature being desirably a relatively low temperature in a range above **110** degrees Celsius which is the melting point of the high-pressure low density polyethylene which is the base resin of the crosslinked polyethylene used as the insulating material of the cable in the most often case. As described above, the blend amount of the aliphatic alkyl peroxide is usually **0.3** to **3.0** parts by weight, preferably, **0.5** to **3.0** parts by weight, more preferably, **0.5** to **1.0** parts by weight, relative to **100** parts by weight of the polyolefin based rubber or resin. If it is less than **0.3** parts by weight, no sufficient crosslinking may proceed, causing deformation when the cable is used, and if it exceeds **4.0** parts by weight, crosslinking may excessively proceed, lowering the adhesion between the inner semiconductive layer and the conductor. Incidentally, when the mixture of **2,5**-dimethyl-**2,5**-di(t-butylperoxy) hexane and **2,5**-dimethyl-**2,5**-di(t-butylperoxy) hexyne-**3** is used as the alkyl peroxide, their mixing ratio is not particularly limited.

In addition to the ingredients described above, if necessary, it may contain an antioxidant such as **4,4'**-thiobis(**3**-methyl-**6**-tert-butylphenol), **2,6**-ditert-butyl-**4**-methylphenol, tetrakis-[methylene-**3**-(**3',5**'-ditert-butyl-4'-hydroxyphenyl) propionate] methane, **2**-mercaptobenzimidazole, bis[**2**-methyl-**4**-{**3**-n-alkyl (C**₁₄** or C**₁₂**) thio propionyloxy}-5-tert-butylphenyl] sulfide, **2,2,4**-trimethyl-**1,2**-dihydroquinoline polymer; a lubricant such as stearic acid, zinc stearate, oleic acid amide, polyethylene wax or the like.

In this embodiment, the inner semiconductive layer **2,** the insulating layer **3** and the outer semiconductive layer **4,** which will be described later, are preferably successively molded by extrusion at the same time of at least the inner semiconductive layer **2** and the insulating layer **3** in one crosshead on the watertight conductor **1,** from the viewpoint of the smoothness of the interface between the insulating layer and the inner semiconductive layer, and it is more preferable that the inner semiconductive layer **2,** the outer semi-insulating layer **3** and the conductive layer **4** are formed successively by extrusion at the same time in one crosshead.

Further, the inner semiconductive layer **2** used in the present embodiment is constituted by crosslinking treatment by heating. As with a general crosslinked polyethylene cable, the crosslinking treatment is preferably carried out after extrusion molding, and by a heating method by infrared, hot gas, high temperature oil or the like, for example heating at **140** to **350** degrees Celsius, and simultaneously with the crosslinking of the insulating layer **3,** which will be described later.

The thickness of the inner semiconducting layer **2** may be e.g. **0.5** to **2.5** mm as a preferred example.

### (Insulating layer)

In this embodiment, the insulating layer **3** is used to isolate the high voltage applied to the conductor in the water blocking power cable.

The insulating layer **3** to be used in the present embodiment is formed of an insulating coating material mainly comprising polyolefin based rubber or resin. Here, as the polyolefin based rubber or resin, rubber such as ethylene-propylene (EP) rubber, ethylene-butene rubber, high-pressure process low-density polyethylene rubber, etc., or resins such as high-pressure process low-density polyethylene, low-pressure process medium or high density polyethylene, low-pressure process low-density polyethylene, low-pressure process very low density polyethylene, ethylene-vinyl acetate copolymer (EVA) resin, ethylene acrylic acid ethyl copolymer (EEA) resin, ethylene-methyl methacrylate copolymer (EMMA) resin, etc., or a mixture thereof may be used. Particularly in the case of high voltage, super high voltage and ultra high voltage cables, it is allowed to be exposed to high temperatures, e.g. maximum normal temperature of **90** degrees Celsius and instantaneous conductor temperature of **200** degrees Celsius by electrical conduction of the conductor, so that it is preferable that these insulating materials are crosslinked by appropriate method such as an organic peroxide, sulfur, an electron beam, silane, respectively.

Further, as described above, since it is necessary to smooth the interface between the inner semiconducting layer **2** and the insulating layer **3,** the inner semiconducting layer **2** and the insulating layer **3** are preferably formed of the same or similar coating material having the same degree of fluidity.

The thickness of the insulating layer **3** may be e.g. **3** to **32** mm as a preferred example.

### (Outer semiconductive layer)

In this embodiment, the outer semiconductive layer **4** is used for the shielding of the insulating layer in the water blocking power cable.

For example, the outer semiconductive layer **4** used in this embodiment is formed of a conductive material mainly comprising those obtained by blending carbon black in the polyolefin based rubber or resin as in the inner semiconducting layer.

The thickness of the outer semiconductive layer **4** may be e.g. **0.5** to **2.5** mm as a preferred example.

### [Effects of Embodiment]

By adopting the above configuration, the electrical performance required for the water blocking power cable is held good, and the adhesion between the inner semiconducting layer **2** and the watertight conductor **1** is maintained satisfactorily, and the water blocking power cable capable of effectively blocking the water penetration can be produced. This is considered due to the following effects: That is, the aliphatic dialkyl peroxide used as a component of the inner semiconducting layer **2** is known as a suitable crosslinking agent for crosslinking the polyolefin based rubber or resin, but has properties of low stability of radicals of reaction intermediates, and tendency to be affected by crosslinking inhibition in comparison with aromatic dialkyl peroxide such as the dicumyl peroxide, **1,3**-**bis** (tert-butylperoxy isopropyl) benzene, etc. that are most commonly used as a crosslinking agent for EP rubber and crosslinked polyethylene. In the inner semiconductive layer **2** formed with using a conductive material described above, which comprises a mixture of aromatic dialkyl peroxide and polyolefin based rubber or resin having such properties, when the cable is crosslinked by heating, the progress of crosslinking of the outermost surface portion in direct contact with the outermost layer of its watertight conductor **1** is inhibited due to the influence of the metal elements constituting the watertight conductor **1** in contact, and is left in uncrosslinked state or low crosslinked state.

By this heat crosslinking, since the decomposition product of the aliphatic dialkyl peroxide has a high affinity characteristic with the polyolefin based rubber or resin which is the base material of the inner semiconductive layer **2,** the foregoing outermost surface portion of the low crosslinked portion or uncrosslinked portion in contact with the watertight conductor **1** is swelled. It is considered that by the action of these, an adhesive layer more excellent in adhesion property than the body portion of the layer **2** is formed over the outermost surface portion (the watertight conductor 1 side portion) of the inner semiconducting layer **2,** and the adhesion between the watertight conductor 1 and the inner semiconducting layer **2** is improved remarkably

### [Method of producing the water blocking power cable]

The water blocking power cable according to the present embodiment can, for example, be produced in the following manner. Namely, as a conductor, a watertight conductor is produced by twisting metal wires together and filling an ingredient such as rubber, resin or high viscosity oil, etc. in a gap between the wires, and an inner semiconductive layer, an insulating layer, and an outer semiconductive layer are molded thereover by extrusion, thereafter crosslinked by heating with an infrared heater, etc. in pressurized state or the like.

### EXAMPLES

The water blocking power cable of the present invention will hereinafter be described more specifically by way of examples. Incidentally, by the following examples, the present invention does not receive any restriction.

### (Example 1)

As an inner semiconductive layer, **100** parts by weight of ethylene vinyl acetate copolymer resin (Du Pont-Mitsui Polychemicals Co., Ltd., trade name: Evaflex EV**450**), **0.5** parts by weight of antioxidant (Sumitomo Chemical Co., Ltd., trade name: Sumilizer WX-R), **55** parts by weight of carbon black (Denki Kagaku Kogyo Co., Ltd., trade name: Denka Black), and **1** part by weight of **2,5**-dimethyl-**2,5**-di(t-butylperoxy) hexane are mixed and pelleted in the Banbury mixer, and extruded and covered **1** mm thick over a watertight conductor with **95** mm² conductor cross-sectional area which is formed by filling and twisting together a butyl rubber based watertight material (compound) between **19** strands, and an insulating layer made of **9** mm thick crosslinked polyethylene and a **1** mm thick outer semiconductive layer are sequentially extruded and coated at the same time within one crosshead, and are crosslinked by heating in a condition for a temperature of the inner semiconductive layer part to be **180** degrees Celsius or more. This results in a sample of water blocking power cable. By using this sample, the following workability test, water blocking test, and heating deformation test are carried out. Ingredient formulations and test results of the inner semiconductive layer used are shown in Table **1.**

### (Workability test)

The workability is determined by whether or not it is possible to produce the above model cable. It is evaluated as "Pass" when the inner cable semiconductive layer can be molded with an extruder, or as "Fail" when it cannot.

### (Water blocking test)

The water blocking test is evaluated by whether or not there is a water leak from the other end after **24** hours, by water pressurization of **3** MPa to one end of a **5** m long sample. It is evaluated as "Fail" when there is a leak, or as "Pass" when there is no leak.

### (Heating deformation test)

The heating deformation test is evaluated by whether the deformation of the inner semiconductive layer is large or small, by applying a load of **5** kg to a halved cable sample in a constant temperature bath of **95** degrees Celsius. It is evaluated as "Pass" when the deformation amount is less than **50%,** and as "Fail" when it is **50%** or more.

### (Examples 2 to 8)

Samples of water blocking power cables are produced in the same manner as in Example **1** except that the formulations of the components of the inner semiconductive layer are changed as shown in Table **1.** Using these samples, the above workability test, water blocking test, and heating deformation test are carried out. The ingredient formulations and test results of the inner semiconductive layer used are shown in Table **1.** Incidentally, as the constituents of the inner semiconductive layer, Example **4** uses **100** parts by weight of ethylene ethyl acrylate copolymer resin (Nippon Unicar Co., Ltd., trade name: DPDJ-**9169**), 1 part by weight of **2,5**-dimethyl-**2,5**-di(t-butylperoxy) hexane, Example **5** uses a mixture of **10** parts by weight of ethylene-propylene rubber (JSR Corp.: trade name EP**21**) and **90** parts by weight of ethylene-vinyl acetate copolymer resin and **1** part by weight of **2,5**-dimethyl-**2,5**-di(t-butyl peroxy) hexane, Example **2** uses **1** part by weight of **2,5**-dimethyl-**2,5**-di(t-butylperoxy) hexyne-**3**, Example **3** uses **0.5** parts by weight of **2,5**-dimethyl-**2,5**-di(t-butyl peroxy) hexane and **0.5** parts by weight of **2,5**-dimethyl-**2,5**-di(t-butylperoxy) hexyne-**3**, Example **6** uses **0.3** parts by weight of **2,5**-dimethyl-**2,5**-di(t-butylperoxy) hexane, Example **7** uses **3.0** parts by weight of **2,5**-dimethyl-**2,5**-di(t-butylperoxy) hexane, and Example **8** uses a mixture of **10** parts by weight of ethylene-propylene rubber and **90** parts by weight of ethylene ethyl acrylate copolymer resin, and **1.0** part by weight of **2,5**-dimethyl-**2,5**-di(t-butylperoxy) hexane.

### (Comparative examples 1 to 4)

Samples of water blocking power cables are produced in the same manner as in Example **1** except that the formulations of the components of the inner semiconductive layer are changed as shown in Table **1.** Using these samples, the above workability test, water blocking test, and heating deformation test are carried out. The ingredient formulations and test results of the inner semiconductive layer used are shown in Table **1.** Incidentally, as the constituents of the inner semiconductive layer, Comparative example **1** uses **100** parts by weight of butyl rubber (JSR Corp., trade name: JSR BUTYL **065**) and **30** parts by weight of process oil (Idemitsu Kosan Co., Ltd., trade name PW-**90**), and also Comparative example **2** uses **1** part by weight of dicumyl peroxide.

**Table 1**

| | Comparative example 1 | Comparative example 2 | Comparative example 3 | Comparative example 4 | Example 1 | Example 2 | Example 3 | Example 4 | Example 5 | Example 6 | Example 7 | Example 8 |
|---|---|---|---|---|---|---|---|---|---|---|---|---|
| Butyl rubber | 100 | | | | | | | | | | | |
| Ethylene-vinyl acetate copolymer resin | | 100 | 100 | 100 | 100 | 100 | 100 | | 90 | 100 | 100 | |
| Ethylene ethyl acrylate copolymer resin | | | | | | | | 100 | | | | 90 |
| Ethylene-propylene rubber | | | | | | | | | 10 | | | 10 |
| Antioxidant | 0.5 | 0.5 | 0.5 | 0.5 | 0.5 | 0.5 | 0.5 | 0.5 | 0.5 | 0.5 | 0.5 | 0.5 |
| Process oil | 30 | | | | | | | | | | | |
| Carbon black | 55 | 55 | 55 | 55 | 55 | 55 | 55 | 55 | 55 | 55 | 55 | 55 |
| Dicumyl peroxide | | 1 | | | | | | | | | | |
| 2,5-dimethyl-2,5-di(t-butylperoxy) hexane | | | 0.2 | 4 | 1 | | 0.5 | 1 | 1 | 0.3 | 3 | 1 |
| 2,5-dimethyl-2,5-di(t-butylperoxy) hexyne-3 | | | | | | 1 | 0.5 | | | | | |
| Workability | Fail | Pass | Pass | Pass | Pass | Pass | Pass | Pass | Pass | Pass | Pass | Pass |
| Water blocking testing | - | Fail | Pass | Fail | Pass | Pass | Pass | Pass | Pass | Pass | Pass | Pass |
| Heating deformation testing | - | Pass | Fail | Pass | Pass | Pass | Pass | Pass | Pass | Pass | Pass | Pass |

### (Test results)

It was confirmed that in Comparative example 1 using the butyl rubber similar to the watertight material (compound) to be filled into the watertight conductor, no satisfactrory shape can be produced (no cable sample can be produced) with the extruder for the inner semiconductive layer of typical cable, and the workability is poor. Therefore, no water blocking test and heating deformation test can be carried out. It was confirmed, on the other hand, that in Example **1** to **8** using the formulated compounds or mixtures based on the ethylene-vinyl acetate copolymer (EVA) resin or the ethylene ethyl acrylate copolymer (EEA) resin, the characteristics thereof are similar to those of the inner semiconductive layer of typical cable, and molding is possible without problems.

Further, comparing Comparative example **2** using dicumyl peroxide (DCP) as the crosslinking agent, Example **1** using **2,5**-dimethyl-**2,5**-di(t-butylperoxy) hexane, Example **2** using **2,5**-dimethyl-**2,5-**di(t-butylperoxy) hexyne-**3**, and Example **3** using the mixture thereof, crosslinking of any thereof progresses, and the deformation of the inner semiconductive layer is also slight, but in Comparative example **2** water leak occurs. As a result of dismantling the coating layer of these cables, it was confirmed that in Comparative example **2** the inner conductive layer and the watertight conductor are separated cleanly, whereas in Examples **1** to **3** a portion of the inner conductive layer remains on the conductor side, showing better adhesion. Thus, it was confirmed that the crosslinking by blending the aliphatic alkyl peroxide which is the component of the inner conductive layer in the present invention is more excellent in adhesion property with the watertight conductor than using the aromatic alkyl peroxide.

Furthermore, it was confirmed that the blend amount of the aliphatic alkyl peroxide may be not less than **0.3** parts by weight and not more than **3** parts by weight. That is, by comparison of Example **6** and Comparative example **3,** it was confirmed that at **0.2** or less parts by weight, no sufficient crosslinking occurs and the heating deformation is poor. On the other hand, by comparison of Example **7** and Comparative example **4,** it can be seen that the water prevention characteristic is poor at **4** parts by weight or more. It is considered because at **4** or more parts by weight, even when using an aliphatic alkyl peroxide, due to crosslinking proceeding enough to outermost surface portion in contact with the watertight conductor of the inner semiconductive layer, the adhesion between the watertight conductor and the inner semiconductive layer lowers. That is, it is considered because in the outermost surface portion (the watertight conductor side portion) of the inner semiconductive layer, no adhesive layer more excellent in adhesiveness than the body portion of the inner semiconductive layer is formed. Further it was confirmed that as the base resin, the EVA resin, the EEA resin used in Example **4,** the blend of the EVA resin and EP rubber in Example **5**, the blend of the EEA resin and EP rubber in Example **8,** etc. can be suitably used.

## Claims

1. A water blocking power cable, comprising:
a cable core comprising in this order:
a watertight conductor formed by twisting a plurality of wires filled with watertight material therebetween;
an inner semiconductive layer formed of a conductive material mainly comprising a mixture blended **100** parts by weight of polyolefin based rubber or resin, 10 to **100** parts by weight of carbon black, and **0.3** to **3.0** parts by weight of aliphatic alkyl peroxide, the inner semiconductive layer being crosslinked by heating;
an insulating layer formed from an insulating coating material mainly comprising polyolefin based rubber or resin; and
an outer semiconductive layer.

2. The water blocking power cable according to claim **1**, wherein the inner semiconductive layer, the insulating layer, and the outer semiconductive layer are formed successively by extrusion at the same time of at least the inner semiconductive layer and the insulating layer over the watertight conductor.

3. The water blocking power cable according to claim **1** or **2,** wherein the aliphatic alkyl peroxide constituting the inner semiconductive layer is one compound of **2,5**-dimethyl-**2,5**-di(t-butylperoxy) hexane and **2,5**-dimethyl-**2,5**-di(t-butylperoxy) hexyne-**3**, or a mixture thereof.

4. The water blocking power cable according to any one of claims **1** to **3,** wherein the polyolefin based rubber or resin constituting the inner semiconductive layer is one compound of ethylene-vinyl acetate copolymer (EVA) resin and ethylene ethyl acrylate copolymer (EEA) resin, or a mixture of two or more selected from ethylene-vinyl acetate copolymer (EVA) resin or ethylene ethyl acrylate copolymer (EEA) resin and ethylene propylene (EP) rubber.

## Patentansprüche

1. Wasserdichtes Stromkabel, das Folgendes umfasst:
einen Kabelkern, der in der folgenden Reihenfolge Folgendes umfasst:
einen wasserdichten Leiter, der durch Verdrehen einer Vielzahl von Drähten gebildet ist, zwischen denen mit wasserdichtem Material gefüllt ist;
eine innere Halbleiterschicht, die aus einem leitenden Material gebildet ist, das hauptsächlich eine Mischung umfasst, in der 100 Gewichtsteile an Polyolefin-basiertem Gummi oder Harz, 10 bis 100 Gewichtsteile an Ruß und 0,3 bis 3,0 Gewichtsteile an aliphatischem Alkylperoxid gemischt sind, wobei die innere Halbleiterschicht durch Erhitzen vernetzt ist;
eine Isolierschicht, die aus einem isolierenden Beschichtungsmaterial gebildet ist, das hauptsächlich Polyolefin-basiertes Gummi oder Harz umfasst; und
eine äußere Halbleiterschicht.

2. Wasserdichtes Stromkabel nach Anspruch 1, worin die innere Halbleiterschicht, die Isolierschicht und die äußere Halbleiterschicht nacheinander gebildet werden durch gleichzeitiges Extrudieren von mindestens der inneren Halbleiterschicht und der Isolierschicht über den wasserdichten Leiter.

3. Wasserdichtes Stromkabel nach Anspruch 1 oder 2, worin das aliphatische Alkylperoxid, das die innere Halbleiterschicht bildet, eine Verbindung von 2,5-Dimethyl-2,5-di(t-butylperoxy)hexan und 2,5-Dimethyl-2,5-di(t-butylperoxy)hexin-3 oder eine Mischung davon ist.

4. Wasserdichtes Stromkabel nach einem der Ansprüche 1 bis 3, worin das Polyolefin-basierte Gummi oder Harz, das die innere Halbleiterschicht bildet, Folgendes ist: eine Verbindung von Ethylenvinylacetat-Copolymer (EVA)-Harz und Ethylenethylacrylat-Copolymer (EEA)-Harz oder eine Mischung von zwei oder mehr, die aus Ethylenvinylacetat-Copolymer (EVA)-Harz oder Ethylenethylacrylat-Copolymer (EEA)-Harz und Ethylenpropylen (EP)-Gummi ausgewählt sind.

## Revendications

1. Câble électrique à blocage d'eau, comprenant :
une âme de câble comprenant dans l'ordre suivant :
un conducteur étanche à l'eau formé en torsadant une pluralité de fils aux interstices comblés par un matériau étanche à l'eau ;
une couche semi-conductrice interne formée d'un matériau conducteur comprenant principalement un mélange composé de 100 parties en poids d'un caoutchouc ou d'une résine polyoléfinique, de 10 à 100 parties en poids de noir de carbone, et de 0,3 à 3,0 parties en poids de peroxyde alkyle aliphatique, la couche semi-conductrice interne étant réticulée par chauffage ;
une couche isolante formée à partir d'un matériau de revêtement isolant comprenant principalement un caoutchouc ou une résine polyoléfinique ; et
une couche semi-conductrice externe.

2. Câble électrique à blocage d'eau selon la revendication 1, dans lequel la couche semi-conductrice interne, la couche isolante et la couche semi-conductrice externe sont formées successivement par extrusion en même temps qu' au moins la couche semi-conductrice interne et la couche isolante par-dessus le conducteur étanche à l'eau.

3. Câble électrique à blocage d'eau selon la revendication 1 ou 2, dans lequel le peroxyde alkyle aliphatique constituant la couche semi-conductrice interne est un composé de 2,5-diméthyl-2,5-di(t-butylperoxy) hexane et 2,5-diméthyl-2,5-di(t-butylperoxy) hexyne-3, ou un mélange de ceux-ci.

4. Câble électrique à blocage d'eau selon l'une quelconque des revendications 1 à 3, dans lequel le caoutchouc ou la résine polyoléfinique constituant la couche semi-conductrice interne est un composé de résine de copolymère d'éthylène-acétate de vinyle (EVA) et résine de copolymère d'éthylène-acrylate d'éthyle (EEA), ou un mélange de deux ou plusieurs composants sélectionnés parmi la résine de copolymère d'éthylène-acétate de vinyle (EVA) ou la résine de copolymère d'éthylène-acrylate d'éthyle (EEA) et le caoutchouc d'éthylène propylène (EP).
